# EUROPÄISCHE PATENTANMELDUNG

(11) **EP 2 362 186 A1**
(43) Veröffentlichungstag der Anmeldung: **31.08.2011**
(21) Anmeldenummer: 10075088.4
(22) Anmeldetag: 26.02.2010
(51) Int. Cl.: G01C 21/36, G10L 15/26, G06F 3/01, B60K 37/06, B60R 16/037, G06F 3/048, G06F 3/16, G10L 15/22, B60K 35/00, H04M 1/725, H04M 1/60

(54) **Bedieneinrichtung für elektronische Gerätefunktionen in einem Kraftfahrzeug**

(71) Anmelder: Deutsche Telekom AG, 53113 Bonn (DE); Technische Universität Berlin, 10623 Berlin (DE)
(72) Erfinder: Oberle, Frank, Berlin 10623 (DE); Burkhardt, Felix, Berlin 10551 (DE); Scheerbarth, Thomas, Berlin 12555 (DE); Zhou, Jianshen, Berlin 12357 (DE); Niemann, Julia, Berlin 10119 (DE); Naumann, Anja, Berlin 10439 (DE); Seide, Stefan, Berlin 10407 (DE)
(74) Vertreter: Drosch, Ulrich

(57) **Zusammenfassung**

Die Erfindung betrifft eine Bedieneinrichtung zur Bedienung elektronischer Gerätefunktionen mit einem graphischen Benutzerinterface, mit einem, mittels einer an einer Einrichtung zur Fahrzeugbedienung angeordneten Funktionstaste aktivierbaren Sprachinterface und einer Steuereinrichtung mit einer Dialogmanagementkomponente. Das graphische Benutzerinterface besteht aus einem Touchscreen und aus Mitteln zur Interpretation über den Touchscreen entgegengenommener Benutzereingaben. Das Sprachinterface besteht aus mindestens einem Mikrofon, mindestens einem Lautsprecher und Mitteln zur Sprachverarbeitung. Die Bedieneinrichtung ist so ausgebildet, dass die mit ihr ausgeführten Bedienvorgänge konsequent nutzergetrieben erfolgen. Dazu ist jeder zu einem beliebigen Zeitpunkt mittels der Bedieneinrichtung mögliche Bedienvorgang jeweils wahlweise unter Nutzung des graphischen Benutzerinterfaces oder des aktivierten akustischen Benutzerinterfaces ausführbar. Nach einer Benutzereingabe über den Touchscreen werden Systemantworten ausschließlich über dessen Display ausgegeben. Im Falle einer Benutzereingabe über das mittels der Funktionstaste aktivierbare Sprachinterface werden hingegen Systemantworten sowohl über das Display als auch über den mindestens einen Lautsprecher ausgegeben.

## Beschreibung

Die Erfindung betrifft eine Bedieneinrichtung zur Bedienung elektronischer Gerätefunktionen. Sie bezieht sich dabei insbesondere auf den Automotive-Bereich, also auf die Bedienung elektronischer Gerätefunktionen in Kraftfahrzeugen, wobei es sich im Hinblick auf die insoweit umfassende Bedeutung des Begriffs Automotive bei den Kraftfahrzeugen nicht zwingend um Straßenfahrzeuge beziehungsweise um Automobile handeln muss. Bei den mittels der Bedieneinrichtung bedienbaren Gerätefunktionen kann es sich sowohl um Funktionen handeln, welche die Bedieneinrichtung gegebenenfalls selbst zur Verfügung stellt, wie beispielsweise Funktionen der Telekommunikation oder der elektronischen Kommunikation allgemein (Sprachtelefonie, Fax oder Funktionen eines E-Mail-Clients), als auch um Funktionen eines oder mehrerer mit der Bedieneinrichtung gekoppelter elektronischer Geräte (zum Beispiel Audioanlage beziehungsweise MP3-Player oder dergleichen), wobei die Bedieneinrichtung im letztgenannten Fall für die Geräte gewissermaßen eine gemeinsame zentrale Benutzerschnittstelle darstellt. Dabei bezieht sich die Erfindung im Kern auf den Aspekt der Bedienung, so dass es nicht darauf ankommt, ob und gegebenenfalls welche Funktionen durch entsprechende Einheiten der Bedieneinrichtung selbst ausgeführt werden. Demnach ist von der Erfindung auch der Fall umfasst, dass die Bedieneinrichtung selbst keinerlei weitere Funktionen zur Verfügung stellt, sondern ausschließlich der Bedienung mit ihr gekoppelter Geräte dient.

In den letzten Jahren hat sich die Zahl elektronischer Geräte in modernen Kraftfahrzeugen ständig erhöht. Insbesondere in Automobilen und hier vornehmlich in Personenkraftwagen kommen immer mehr elektronische Geräte zum Einsatz, welche einerseits, wie Geo-Navigationsgeräte, der Unterstützung des Fahrzeugführers dienen oder, wie zum Beispiel Klimaanlagen oder Einrichtungen zur Klimatisierung der Sitze, zur Verbesserung des Fahrkomforts beitragen sollen. Ferner finden vermehrt Geräte der Unterhaltungstechnik, wie Radio, MP3-Player oder CD- beziehungsweise DVD-Abspielgeräte, Einsatz in den Kraftfahrzeugen. Insbesondere in jüngerer Zeit ist darüber hinaus im Zusammenhang mit der zunehmenden telekommunikativen Vernetzung und den zwischenzeitlich nahezu überall verfügbaren Möglichkeiten der Telekommunikation und des Datenaustausches eine weitere Zunahme von elektronischen Geräten beziehungsweise von elektronischen Funktionen in Kraftfahrzeugen zu verzeichnen.

Bei allem insoweit zu verzeichnendem technischen Fortschritt gilt es aber zu beachten, dass der Führer eines Kraftfahrzeugs sich zu jedem Zeitpunkt vor allem auf das Verkehrsgeschehen konzentrieren muss, wobei sich auch diesbezüglich die Anforderungen an den Fahrzeugführer aufgrund der zunehmenden Komplexität des Verkehrs weiter erhöhen. Daher müssen die elektronischen Geräte in den Kraftfahrzeugen so gestaltet sein, dass sie dem Rechnung tragen und durch den Fahrzeugführer ohne größere Ablenkung vom Verkehrsgeschehen zu bedienen sind. Dies bezieht sich einerseits auf die Anordnung eventueller manuell zu betätigender Bedienelemente und andererseits auf die zum Einsatz gelangenden Bedienkonzepte. Letzteres betrifft vor allem die Frage, in welcher Weise der Fahrzeugführer oder eventuell weitere Fahrzeuginsassen - im Falle eines Pkw vorzugsweise der Beifahrer - die unterschiedlichen elektronischen Geräte zur Ausführung der von ihnen unterstützten Funktionen veranlassen können. Dabei wird die Bereitstellung entsprechender Bedienkonzepte durch den technischen Fortschritt ebenfalls unterstützt. Zu nennen sind insoweit insbesondere Möglichkeiten der Bedienung über berührungsempfindliche Displays, welche es sehr flexibel ermöglichen, die Darstellung der durch Antippen ihrer druckempfindlichen Fläche jeweils bedienbaren Gerätefunktionen an vorhergehende Bedienvorgänge sowie von den bedienten Geräten jeweils augenblicklich eingenommene Betriebszustände anzupassen. Eine weitere in diesem Zusammenhang zu nennende Bedienmöglichkeit stellt die sprachgesteuerte Bedienung von Geräten dar. Unabhängig davon sind in Kraftfahrzeugen zunehmend integrierte Bedienkonzepte anzutreffen, bei denen die Bedienung mehrer Geräte mittels einer gemeinsamen Bedieneinrichtung erfolgt, wobei man im Zuge einer entsprechenden Bedienerführung das zu bedienende Gerät und die vom Gerät auszuführenden Funktionen auswählen kann.

Einige modernere Geräte, möglicherweise auch Bedieneinrichtungen für mehrere Geräte, ermöglichen in diesem Zusammenhang eine so genannte multimodale Bedienung. Bei ihnen können Gerätefunktionen teilweise über unterschiedliche Bedienkanäle, wie manuelle mechanische Tastenbedienung, Bedienung mittels berührungsempfindlichem Display (im Allgemeinen und nachfolgend teilweise auch als Touchscreen) oder Sprachbedienung, bedient werden. Nach dem Stand der Technik sind dabei die Bedienkonzepte häufig so gestaltet, dass einzelne Gerätefunktionen über diesen Bedienkanal, andere Gerätefunktionen über jenen Bedienkanal ausgeführt werden können und nur im Einzelfall für ein und dieselbe Gerätefunktion gleichzeitig unterschiedliche Bedienkanäle zur Verfügung stehen. Zudem erscheint dabei die Auswahl und Zuordnung der Bedienkanäle zu einzelnen Gerätefunktionen häufig willkürlich und auch nicht schlüssig und orientiert sich vielfach nicht an den Bedürfnissen des Fahrzeugführers im Hinblick auf die unterschiedlichen, ihn konfrontierenden Verkehrssituationen. Darüber hinaus ist zum Beispiel festzustellen, dass eine rein sprachgesteuerte Bedienung für den Fahrer unter dem Gesichtspunkt, dass er die Hände für die Bedienung der eigentlichen Fahrzeugfunktionen frei behält, sehr günstig ist, aber auf der anderen Seite der psychologische Effekt beobachtet werden konnte, dass Personen, welche Geräte in dieser Weise bedienen, entsprechenden akustischen Feedbacks des Geräts beziehungsweise entsprechenden akustischen Systemantworten der für die Gerätebedienung benutzten Bedieneinrichtung gewissermaßen nicht trauen. Dabei wird es möglicherweise vom Führer eines Kraftfahrzeugs als durchaus angenehm empfunden, wenn er über ein Display ein zusätzliches Feedback erhält, über welches er, gewissermaßen durch Wahrnehmung im Augenwinkel, eine zusätzliche Kontrolle über das exakte Funktionieren des jeweiligen Geräts beziehungsweise die richtige Verarbeitung seiner Bedienanweisungen erhält. Ferner werden Bedienmittel zur akustischen beziehungsweise Sprachbedienung sinnvollerweise im Allgemeinen auf den Fahrer beziehungsweise den Kraftfahrzeugführer fokussiert. Das heißt, ein zur Bedienung erforderliche Mikrofon wird hinsichtlich seiner Anordnung und Richtcharakteristik auf den Fahrer ausgerichtet. Auf der anderen Seite wird es aber eventuell von den Fahrzeuginsassen als vorteilhaft angesehen, wenn auch sie gewissermaßen nachvollziehen können, welche Bedienvorgänge durch den Fahrzeugführer jeweils getätigt werden. Zudem kann es vorteilhaft sein, wenn Bedienvorgänge teilweise oder vollständig beispielsweise auch durch andere Fahrzeuginsassen, im Falle eines Pkw oder Lkw vorzugsweise durch den Beifahrer ausgeführt werden können, während sich der Fahrzeugfüher auf das Verkehrsgeschehen konzentriert. Insoweit ist es wünschenswert, die Bedienung elektronischer Geräte in Kraftfahrzeugen unter diesen Gesichtpunkten möglichst flexibel zu gestalten.

Aufgabe der Erfindung ist es daher, eine Bedieneinrichtung zur Bedienung elektronischer Gerätefunktionen in einem Kraftfahrzeug zur Verfügung zu stellen, welche eine noch flexiblere Bedienung der entsprechenden Funktionen ermöglicht und dabei gleichzeitig sicherstellt, dass der Fahrzeugführer sich nahezu ohne Einschränkungen auf das Verkehrsgeschehen konzentrieren kann.

Die Aufgabe wird durch eine Bedieneinrichtung mit den Merkmalen des Patentanspruchs 1 gelöst. Vorteilhafte Aus- beziehungsweise Weiterbildungen der Erfindung sind durch die Unteransprüche gegeben.

Demgemäß wird die Aufgabe gelöst durch eine Bedieneinrichtung mit einem graphischen Benutzerinterface, mit einem durch den Fahrzeugführer mittels einer an einer Einrichtung zur Fahrzeugbedienung angeordneten Funktionstaste aktivierbaren akustischen Benutzerinterface - im weiteren synonym auch als Sprachinterface bezeichnet - und mit einer Steuereinrichtung. Dabei besteht das graphische Benutzerinterface aus einem, eine Ein- und Ausgabeeinheit ausbildenden berührungsempfindlichen Display beziehungsweise Touchscreen und aus Mitteln zur Interpretation durch das berührungsempfindliche Display entgegengenommener Benutzereingaben. Das akustische Benutzerinterface zur sprachlichen Bedienung besteht aus mindestens einem Mikrofon, mindestens einem Lautsprecher und Mitteln zur Interpretation als Spracheingabe entgegengenommener Benutzereingaben durch Sprachverarbeitung. Die Steuereinrichtung, welche eine Dialogmanagementkomponente umfasst, wird aus Speichermitteln und einer Verarbeitungseinheit zur Verarbeitung in den Speichermitteln gehaltener Programmanweisungen und Daten gebildet. Sie steuert den Dialog mit dem Benutzer, insbesondere die Verarbeitung von über jeweils eines der Interfaces entgegengenommenen Benutzereingaben, ferner die entsprechend den jeweiligen Bedieneingaben auszuführenden Gerätefunktionen und die Ausgabe von Systemantworten auf die Benutzereingaben über das Display und/oder den mindestens einen Lautsprecher, wobei das für den Dialog mit dem Benutzer erforderliche Zusammenwirken des graphischen Interfaces und des Sprachinterfaces durch die Dialogkomponente gesteuert wird. Bei den vorgenannten Systemantworten handelt es sich um Quittierungsinformation zur Bestätigung der Entgegennahme einer Benutzereingabe und gegebenenfalls, sofern eine Bedienvorgang mehrere Benutzereingaben erfordert, um entsprechende Aufforderungen zu weiteren noch fehlenden Eingaben. Erfindungsgemäß ist dabei die Bedieneinrichtung so ausgebildet, dass im Betriebszustand der Bedieneinrichtung jeder zu einem beliebigen Zeitpunkt mittels der Bedieneinrichtung mögliche Bedienvorgang jeweils wahlweise unter Nutzung des graphischen Benutzerinterfaces oder des aktivierten akustischen Benutzerinterfaces ausführbar ist. Die Bedieneinrichtung nimmt dabei nach einer Benutzereingabe über das graphische Benutzerinterface einen Betriebsmodus ein, in dem Systemantworten auf diese Benutzereingabe ausschließlich über das Display ausgegeben werden. In einem zweiten, von der Bedieneinrichtung nach einer Benutzereingabe über das akustische Benutzerinterface eingenommenen Betriebsmodus werden hingegen Systemantworten, gesteuert durch die Steuereinrichtung, sowohl über das Display als auch über den mindestens einen Lautsprecher ausgegeben.

Die erfindungsgemäße Bedieneinrichtung ist somit, anders als die aus dem Stand der Technik bekannten Bedienkonzepte, tatsächlich beziehungsweise vollständig multimodal. Sie ist ferner gewissermaßen adaptiv, indem sie ihr Ausgabeverhalten insoweit an die jeweiligen Verkehrsumstände anpasst, als sie sich auf die, aufgrund dessen durch den Fahrzeugführer präferierte Art der Bedienung beziehungsweise an den gewählten Bedienkanal anpasst. Nach der Inbetriebnahme der Bedieneinrichtung ist somit zu jeder Zeit jede mittels dieser Bedieneinrichtung bedienbare Gerätefunktion sowohl akustisch beziehungsweise durch Sprache, als auch durch Bedienung über das berührungsempfindliche Display beziehungsweise den Touchscreen steuerbar. Während er das Fahrzeug bewegt, kann sich der Fahrzeugführer somit vollständig auf das Verkehrsgeschehen konzentrieren, wobei er einerseits alle Funktionen, deren Bedienbarkeit von der Bedieneinrichtung unterstützt wird, durch Spracheingaben ausführen kann und er hierzu ein akustisches Feedback in Form einer entsprechenden akustischen Systemantwort erhält, während andererseits die gleiche Systemantwort in adäquater Weise über das Display ausgegeben wird, über welches er so gewissermaßen im Augenwinkel, eine zusätzliche Kontrolle erhält. Darüber hinaus ist es beispielsweise dem Beifahrer möglich, in das Bediengeschehen durch Betätigung des vorzugsweise an zentraler Stelle zwischen dem Fahrzeugführer und dem Beifahrer angeordneten berührungsempfindlichen Displays einzugreifen. Sofern es die Verkehrssituation erlaubt, das heißt vorzugsweise insbesondere im Stand, beispielsweise auf einem Parkplatz, kann die Bedienung von Gerätefunktionen auch vom Fahrer über die häufig als angenehmer empfundene Betätigung des Touchscreens erfolgen. Ein weiterer sehr wesentlicher Vorteil der erfindungsgemäßen Bedieneinrichtung ist es, dass die mit ihr ausgeführten Bedienvorgänge anders als bei aus dem Stand der Technik bekannten Lösungen nutzergetrieben und nicht systemgetrieben erfolgen. Dies ist im Hinblick auf das akustische Benutzerinterface beziehungsweise auf das Sprachinterface insbesondere dadurch gegeben, dass die Spracheingabe nur bei mittels Funktionstaste aktivierten akustischen Benutzerinterface ermöglicht ist, was bereits an dieser Stelle impliziert, dass der entsprechende Sprachkanal für die Bedienung nicht ständig geöffnet und auch die Sprachausgabe nicht ständig aktiviert ist. Weitere Ausführungen dazu sollen jeweils im Zusammenhang mit der Darstellung vorgesehener Ausbildungsformen der Erfindung gegeben werden. Insoweit ist es aber jedenfalls so, dass der Fahrzeugführer, im Falle dessen, dass er beispielsweise einen Bedienvorgang augenblicklich, aufgrund des Verkehrsgeschehens und seiner dabei geforderten erhöhten Aufmerksamkeit, nicht fortsetzen kann, durch die Bedieneinrichtung nicht durch entsprechende akustische Mitteilungen wiederholt zur Eingabe aufgefordert wird. Vielmehr setzt er selbst, wenn es ihm möglich ist, die Bedienung - nach dem Eintritt der zuvor beschriebenen Situation vorzugsweise durch emeute Aktivierung des Sprachinterfaces mittels der Funktionstaste - fort.

Eine bevorzugte Weiterbildung der erfindungsgemäßen Bedieneinrichtung ist dadurch gegeben, dass das akustische Benutzerinterface außerdem über Mittel zur sprachlichen Synthese von über den mindestens einen Lautsprecher auszugebenden Systemantworten umfasst. Dies ist insbesondere dann vorteilhaft, wenn beispielsweise mittels der Bedieneinrichtung eine Vielzahl von Gerätefunktionen bedienbar ist oder gegebenenfalls mehrere mit ihrer Hilfe bediente Geräte jeweils sehr unterschiedliche Funktionen besitzen und entsprechend unterschiedliche Bedienzustände einnehmen können. Es ist in diesem Falle nicht erforderlich, alle erdenklichen Systemantworten in Form von Sprachdaten beziehungsweise Audiofiles im System zu hinterlegen. Vielmehr können entsprechende Systemantworten zur Laufzeit generiert und nach dem Prinzip des so genannten Text-to-Speech durch Sprachsynthese akustisch in Form sprachlicher Informationen und Hinweise ausgegeben werden. Darüber hinaus kann die Sprachsynthese vorteilhaft im Zusammenhang mit eventuell durch die Bedieneinrichtung selbst zur Verfügung gestellten Funktionen der Telekommunikation, Nachrichtenübertragung oder Informationsvermittlung, wie beispielsweise die Ausgabe von Verkehrs- oder Wetterinformationen genutzt werden. Hierbei ist es dann möglich, entsprechende zunächst in Form rein elektronischer Daten beziehungsweise textlicher Mitteilungen vorliegende Informationen zur Laufzeit in Sprachinformationen zu wandeln, welche über den mindestens einen Lautsprecher des akustischen Benutzerinterfaces ausgegeben werden. Die vorgenannten Mittel zur sprachlichen Synthese können dabei als eigenständige Einheit in der Bedieneinheit ausgebildet oder zumindest teilweise Bestandteil der vorhandenen Steuereinrichtung sein. Im Falle einer Ausbildung als eigenständige Einheit sind hiervon hard- und softwarebasierte Komponenten gleichermaßen umfasst, während andernfalls die hardwaretechnische Basis im Wesentlichen durch die ohnehin vorhandene Steuereinrichtung (mit zugehörigen Speichermitteln) gebildet wird, welche die besagten Mittel zur Sprachsynthese gegebenenfalls auch in Form zusätzlicher Module mit in das Gesamtkonzept der Bedieneinrichtung einbindet.

Die Systemantworten werden auf dem Display vorzugsweise im Kontext eines Menübaums ausgegeben, welcher die mittels der Bedieneinrichtung bedienbaren Gerätefunktionen und die dazu jeweils möglichen oder erforderlichen Bedieneingaben beschreibt. In dem angesprochenen Menübaum sind die Abläufe bei der Bedienung der unterschiedlichen mittels der Bedieneinrichtung bedienbaren Gerätefunktionen in der Art eines Ablaufschemas strukturiert. Er tritt für einen Benutzer der Bedieneinrichtung in Form ihn bei der Eingabe unterstützender Strukturelemente zutage. Hierbei handelt es sich insbesondere um graphische Bedienmenüs und deren Elemente (als Teil der Gesamtstruktur des zugrunde liegenden, durch den in dieser Gesamtheit nicht in einer graphischen Ansicht dargestellten Menübaum beschriebenen Gesamtbedienkonzepts), um virtuelle, das heißt lediglich auf dem Display visualisierte Button oder sonstige visualisierte Bedienelemente sowie um Eingabefelder für Texteingaben. Der Menübaum, für welchen zuvor lediglich die Art der Darstellung seiner Teile auf dem Display in Form von Strukturelementen erläutert wurde, liegt dem Bedienkonzept, welches auch die sprachliche Bedienung einschließt, als Ganzem zugrunde. Einzelne Stationen des von ihm virtuell abgebildeten Ablaufs zur Bedienung unterschiedlicher Gerätefunktionen bilden in diesem Menübaum beziehungsweise Ablaufgraph so genannte Knoten, an denen Systemausgaben erfolgen, Bedieneingaben des Benutzers erwartet werden und gegebenenfalls für den Benutzer Verzweigungsmöglichkeiten im Sinne zueinander alternativ auszuführender Bedienschritte bestehen, wobei die jeweiligen Bedieneingaben gemäß dem Konzept der erfindungsgemäßen Bedieneinrichtung jeweils wahlweise per Sprache oder durch Antippen des Touchscreens erfolgen können.

Der bereits angesprochene gewissermaßen adaptive Charakter der Bedieneinrichtung wird dabei gemäß einer vorteilhaften Ausbildungsform noch dadurch verstärkt, dass die Darstellung auf dem Display nach der Entgegennahme einer über das graphische Benutzerinterface erfolgten Bedieneingabe detailreicher ist, als nach der Entgegennahme einer über das akustische Benutzerinterface erfolgten Bedieneingabe. Auch insoweit wird dem Ansinnen Rechnung getragen dem Fahrzeugführer zusätzlich zu der jeweiligen akustischen Systemantwort ein Feedback über das Display zu gegen, ohne ihn dabei mit Information zu überfrachten und ihn dadurch gegebenenfalls vom Verkehrsgeschehen abzulenken. Zudem spiegelt sich hierin wiederum die konsequent nutzergetriebene Steuerung der Gerätefunktionen wieder, welche es dem Fahrzeugführer entsprechend seiner insbesondere durch das Verkehrsgeschehen bestimmten Möglichkeiten überlässt, zu bestimmen, ob, wann und wie (mittels des graphischen Benutzerinterfaces oder des akustischen Benutzerinterfaces) er einen Bedienvorgang fortsetzt.

Darüber hinaus besteht eine vorteilhafte und sehr praxisgerechte Ausbildung der Erfindung darin, dass es dem Benutzer, vorzugsweise dem Fahrzeugführer, im Falle einer Bedienung über das Sprachinterface, anders als im Falle einer Bedienung durch Antippen des Displays ermöglicht ist, einzelne Knoten des bereits angesprochenen Menübaums, also gewissermaßen einzelne Stationen des zugrunde liegenden Ablaufs, unter Auslassung übergeordneter Knoten, direkt anzuspringen. Diese Möglichkeit bezieht sich insbesondere auf eine erste, nachfolgend auch als Navigationsphase bezeichnete Phase eines Bedienvorgangs, bei welcher sich der Benutzer, im Falle einer Bedienung über über den Touchscreen, innerhalb des schon angesprochenen Menübaums, teilweise auch unter Ausscheidung jeweils anderer Bedienaltemativen, zu den für die Veranlassung der von ihm zu bedienen gewünschten Gerätefunktion jeweils maßgeblichen Knoten bewegt. Hieraus ergibt sich insbesondere für geübte und mit dem System aus Bedieneinrichtung und Gerätefunktionen beziehungsweise bedienten Geräten vertraute Benutzer (so genannte Expert-User) die vorteilhafte Möglichkeit einer zeitsparenden Verkürzung des Bedienvorgangs.

Vorzugsweise ist die Bedieneinrichtung als eine so genannte, im Fahrzeug fest verbaute Headunit ausgebildet. Eine weitere Möglichkeit besteht aber darin, dass die Bedieneinrichtung als eine modulare Einheit ausgebildet ist, welche mit einer dafür im Kraftfahrzeug ausgebildeten, vorzugsweise in ein Bussystem einbezogenen Fahrzeugschnittstelle verbindbar ist. Die Ausgestaltung ist dabei derart, dass ein im Fahrzeug fest verbautes Mikrofon und mindestens ein in dem Fahrzeug fest verbauter Lautsprecher in das akustische Benutzerinterface der Bedieneinrichtung einbezogen werden. Die Bedieneinrichtung kann aber auch als gewissermaßen eigenständige mobile Einheit ausgebildet sein, welche ebenfalls mit einer Fahrzeugschnittstelle verbindbar ist, aber dennoch über ein eigenes Mikrofon und mindestens einen eigenen Lautsprecher verfügt. Hierbei ist es dann vorgesehen, dass beim Verbinden der in dieser Weise ausgebildeten Bedieneinheit mit der Fahrzeugschnittstelle durch die Steuereinrichtung der Bedieneinrichtung im Falle dessen, dass die Fahrzeugschnittstelle über eine Verbindung zu einem fahrzeuginternen Mikrofon verfügt, das eigene Mikrofon der mobilen Einheit deaktiviert und dafür das fahrzeuginterne Mikrofon in das akustische Benutzerinterface der Bedieneinrichtung einbezogen wird. Entsprechendes gilt für den mindestens einen eigenen Lautsprecher der Bedieneinrichtung und mindestens einen gegebenenfalls mit der Fahrzeugschnittstelle verbundenen fahrzeuginternen Lautsprecher. Diese Ausbildungsform ist insoweit sehr flexibel, als dass sie je nachdem, ob eine Einbeziehung eines fahrzeuginternen Mikrofons und/oder eines fahrzeuginternen Lautsprechers möglich ist, bei der Entgegennahme der akustischen beziehungsweise sprachlichen Benutzereingaben und zur Ausgabe der akustischen Systemantworten auf die einrichtungseigenen Einheiten (Mikrofon, Lautsprecher) zurückgreift oder hierfür im Fahrzeug vorhandene Einrichtungen in das Bedienkonzept einbindet. Sofern über die Fahrzeugschnittstelle ein fahrzeuginternes Mikrofon und/oder ein fahrzeuginterner Lautsprecher nutzbar sind, kann dabei die Deaktivierung der einrichtungseigenen Mittel (Mikrofon, Lautsprecher), beispielsweise über einen Kontakt des für die Verbindung der Bedieneinrichtung mit der Fahrzeugschnittstelle genutzten Steckverbinders, erfolgen. Darüber hinaus ist es aber auch möglich, Entsprechendes softwaremäßig durch die Steuereinrichtung und die zugehörige von der Steuereinrichtung verarbeiteten Software zu erkennen und zu veranlassen. Die letztgenannte Ausbildungsform als eigenständige mobile Einheit eröffnet dabei die Möglichkeit, die Bedieneinrichtung in der Form eines Smartphones zu realisieren.

Im Falle dessen, dass die Bedieneinrichtung selbst keine Funktionen der Telekommunikation zur Verfügung stellt, können zu den mittels der Bedieneinrichtung bedienbaren elektronischen Geräten selbstverständlich auch, beispielsweise an eine Fahrzeugfreisprecheinrichtung gekoppelte Mobilfunkgeräte gehören. Dabei kommt im Hinblick auf die Kopplung eines betreffenden Mobilfunkgeräts mit der Freisprecheinrichtung auch eine Kopplung über eine Funkschnittstelle, wie beispielsweise Bluetooth in Betracht.

Die erfindungsgemäße Bedieneinrichtung ist so ausgebildet, dass Voraussetzung für eine Benutzung des Sprachinterfaces für die Bedieneingabe dessen Aktivierung mittels einer Funktionstaste ist. Es erscheint insoweit nicht sinnvoll, den entsprechenden Sprachkanal für die Bedienung permanent offen zu halten. Dies gilt beispielsweise auch mit Rücksicht auf von Insassen des Fahrzeugs mit dem Fahrzeugführer während der Fortbewegung des Fahrzeugs geführte Gespräche. Aus diesem Grunde ist es nicht vorgesehen, dass der Sprachkanal unmittelbar mit Inbetriebnahme der Bedieneinrichtung zur sofortigen Entgegennahme sprachlicher Bedienkommandos zur Verfügung steht. Ein solcher Sprachkanal ist vielmehr, wie bereits ausgeführt, zunächst durch Aktivierung des akustischen Benutzerinterfaces zu öffnen. Vor dem Hintergrund der zuvor dargestellten Erwägungen ist es daher auch nicht sinnvoll, dass das akustische Benutzerinterface beziehungsweise das Sprachinterface nach seiner erstmaligen Aktivierung mittels der dafür vorgesehenen und in unmittelbarer Reichweite des Fahrzeugführers befindlichen Funktionstaste bis zur Außerbetriebnahme der Bedieneinrichtung aktiviert bleibt. Die Bedieneinrichtung ist demnach vorzugsweise so gestaltet, dass das akustische Benutzerinterface zum Beginn eines jeweiligen Bedienvorgangs, wie beispielsweise die Bedienung eines MP3-Players zum Anspringen eines bestimmten Titels oder die Bedienung eines Navigationsgerätes zur Eingabe eines Navigationsziels, jeweils erst mittels der Funktionstaste aktiviert werden muss. An dieser Stelle sei dabei jedoch bemerkt, dass dies keinesfalls bedeutet, dass jede Eingabe eines gesprochenen Bedienkommandos zunächst ein Betätigen der Funktionstaste erfordert. Vielmehr sind die vorstehenden Ausführungen in diesem Kontext so zu verstehen, dass bei einem komplexeren Bedienvorgang, wie der bereits beispielsweise angesprochenen Zielauswahl in einem Navigationsgerät, welcher mehrere aufeinander folgende Bedienschritte und/oder Bedieneingaben, wie zum Beispiel Eingabe von Ort und Straße des Navigationsziels, erfordert, der Sprachkanal geöffnet bleibt, so dass alle bis zum Abschluss des jeweiligen Bedienvorgangs erforderlichen Bedienkommandos beziehungsweise Bedienschritte ohne jeweils emeute Aktivierung des Sprachinterfaces eingegeben beziehungsweise ausgeführt werden können.

In diesen Zusammenhang ist, wie auch bei der Erläuterung eines Ausführungsbeispiels noch zu zeigen sein wird, bei der Bedienung einer elektronischen Gerätfunktion mittels der erfindungsgemäßen Bedieneinrichtung zwischen einer ersten, bereits als Navigationsphase (Navigation im Sinne eines Hindurchbewegens durch den Menübaum eines komplexen Bedienvorgangs) angesprochenen Phase und einer zweiten Phase, der Ausführungsphase, in welcher unter Umständen selbst mehrere Bedieneingaben erforderlich sind, zu unterscheiden. Erst nach dem vollständigen Abschluss eines Bedienvorgangs, das heißt nach der Eingabe aller dabei erforderlichen Angaben, wird mit dem Beginn der Umsetzung der demgemäß durch das bediente Gerät auszuführenden Funktion der Sprachkanal wieder geschlossen, so dass er, gemäß dem letztgenannten Beispiel, für einen weiteren Bedienvorgang, falls dieser mittels des Sprachinterfaces erfolgen soll, wieder durch Betätigen der Funktionstaste geöffnet werden muss.

Darüber hinaus ist die Bedieneinrichtung gemäß einer bevorzugten Ausbildungsform so gestaltet, dass das Sprachinterface während eines komplexen Bedienvorgangs, welcher mehrere Bedieneingaben erfordert, deaktiviert wird, sofern innerhalb einer in der Steuereinrichtung festgelegten Zeitdauer (Timeout) keine sprachliche Bedieneingabe erfolgt. In diesem Falle muss dann zur Fortsetzung des betreffenden komplexen Bedienvorgangs nach dem Ablauf des Timeout das akustische Benutzerinterface erst wieder durch Betätigen der Funktionstaste aktiviert werden. Die Fortführung eines komplexen, durch eine Spracheingabe eingeleiteten Bedienvorgangs ist also jederzeit mittels des graphischen oder des akustischen Benutzerinterfaces möglich, wobei im Falle eines Timeout zur Fortsetzung des Bedienvorgangs durch akustische beziehungsweise sprachliche Bedieneingaben das Sprachinterface lediglich durch Betätigung der Funktionstaste emeut zu aktivieren ist. Die Fortsetzung der Bedienung erfolgt dabei mit einer der jeweils vor dem Timeout innerhalb des komplexen Bedienvorgangs möglichen Bedieneingaben. Ein mittels der erfindungsgemäßen Bedieneinrichtung durchgeführter Bedienvorgangs ist demnach, wie schon erwähnt, anders als nach dem Stand der Technik üblich, nicht systemgetrieben, sondern ganz klar nutzergetrieben. Das heißt, der Benutzer bestimmt jeweils die zeitliche Abfolge der dabei erforderlichen Bedieneingaben entsprechend den ihm jeweils im Hinblick auf das augenblickliche Verkehrsgeschehen gegebenen Möglichkeiten.

Entsprechend besonders vorteilhafter Weiterbildungen der erfindungsgemäßen Bedieneinrichtung sind der Funktionstaste zur Aktivierung des Sprachinterfaces weitere Funktionen zugewiesen, durch welche eine die Bedieneinrichtung nutzende Person unterstützt und die Navigation, also das Durchlaufen des Menübaums für die Bedienung, erleichtert wird. Eine solche Weiterbildung ist dadurch gegeben, dass bei einer Betätigung der Funktionstaste für eine in der Steuereinrichtung hinterlegte Zeitdauer (das heißt längeres Drücken der Funktionstaste und nicht nur Antippen) veranlasst durch die Steuereinrichtung über den mindestens einen Lautsprecher des akustischen Benutzerinterfaces und/oder über das Display die Ausgabe einer Hilfeinformation zu den augenblicklich mittels der Bedieneinrichtung möglichen akustischen Benutzereingaben erfolgt.

Bei einer möglichen Weiterbildung der Bedieneinrichtung bewirkt ein zweimaliges Betätigen der Funktionstaste im Sinne eines zweimaligen kurzen Antippens einen Abbruch des aktuellen, innerhalb eines komplexen Bedienvorgangs ausgeführten Bedienschritts und ein Zurücksetzen des Bedienvorgangs hinter den letzten, dem abgebrochenen Bedienschritt vorausgehenden Bedienschritt beziehungsweise auf den zuletzt passierten Knoten des Menübaums. Dies meint, dass die Bedieneinrichtung in einen Zustand zurückgesetzt wird, bei dem die zuletzt am Display oder über den Lautsprecher und das Display ausgegebenen Informationen - Systemantworten, akustische Hinweise beziehungsweise auf dem Display angezeigte Interaktionselemente erneut ausgegeben werden und von dem aus entweder erneut der abgebrochene Bedienschritt oder gegebenenfalls ein anderer Bedienschritt ausgeführt werden kann. Gemäß einer weiteren Ausgestaltungsmöglichkeit bewirkt ein dreifaches Betätigen der Funktionstaste den vollständigen Abbruch des gerade durchgeführten Bedienvorgangs, wobei die Bedieneinrichtung in einen Initialzustand übergeht, welcher die emeute Aufnahme von Bedienvorgängen für jede beliebige, mit der Bedieneinrichtung steuerbare elektronische Gerätfunktion ermöglicht. Auch hierbei wird dem Benutzer als Systemantwort auf eine solche dreifache Betätigung der Funktionstaste über das Display und den mindestens einen Lautsprecher eine entsprechende Information gegeben.

Wie eingangs dargelegt, bezieht sich die Erfindung generell auf den Automotive-Bereich. Gemäß einer speziellen, den Einsatz in einem Automobils vorgesehenen Ausbildungsform ist dabei die bereits mehrfach angesprochene Funktionstaste am Lenkrad eines entsprechenden Automobils angeordnet.

Aspekte der Erfindung sollen nachfolgend anhand von Zeichnungen nochmals in der Art eines Ausführungsbeispiels erläutert werden. In den zughörigen Zeichnungen zeigen:
- Fig. 1:: einen Zustandsgraphen für mittels der Bedieneinrichtung durchführbare Bedienvorgänge,
- Fig. 2:: einen Graphen zur Verdeutlichung zur Darstellung der Phasen beim Ablauf eines Bedienvorgangs,
- Fig. 3:: eine schematische Darstellung der Architektur einer möglichen Ausbildungsform der Bedieneinrichtung,
- Fig. 4:: einen Graphen zur Beschreibung der gemäß einer vorteilhaften Ausbildungsform durch Betätigung der Funktionstaste möglichen Bediensteuerung der Einrichtung.

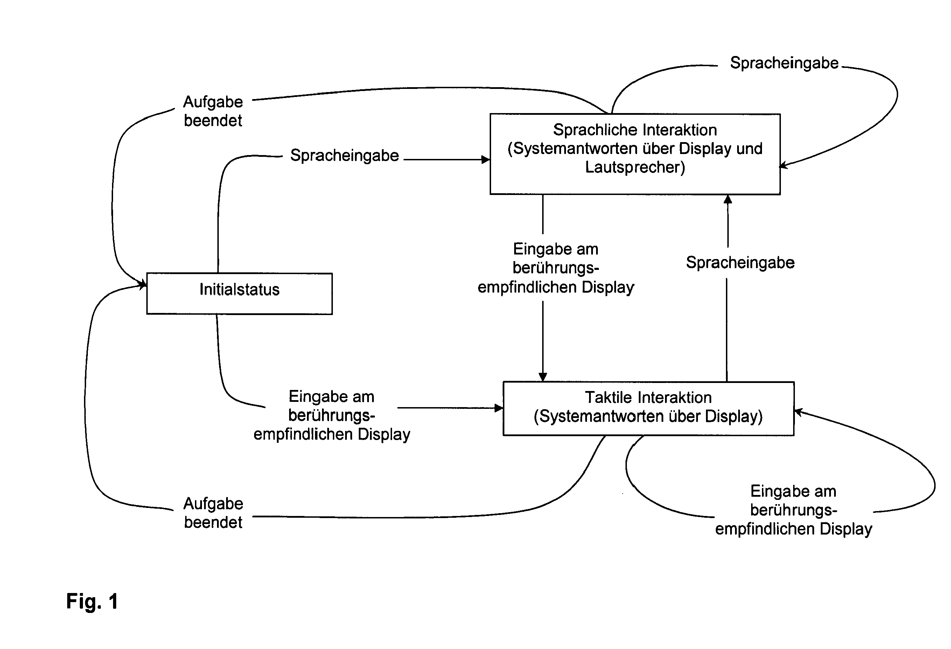

Die Fig. 1 zeigt einen Zustandsgraphen, durch welchen die prinzipiellen Abläufe bei der Durchführung eines Bedienvorgangs für ein mittels der erfindungsgemäßen Bedieneinrichtung bedienbares elektronisches Gerät beziehungsweise für eine Gerätefunktion in allgemeiner Form dargestellt werden.

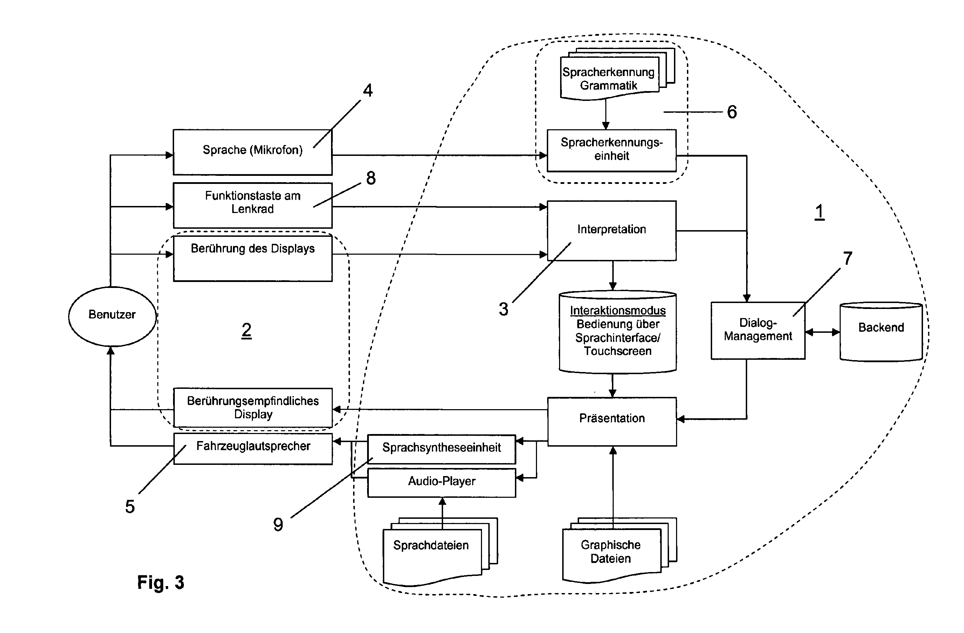

Bei den weiteren beispielhaften Darstellungen soll von der Bedienung eines oder mehrerer mit der Bedieneinrichtung bedienbarer Geräte ausgegangen werden, wobei Analoges für den Fall einer Bedienung von gegebenenfalls durch die Bedieneinrichtung selbst beziehungsweise durch entsprechende Einheiten der Bedieneinrichtung ausführbare Funktionen gilt. Ausgangspunkt der Bedienung bildet ein so genannter Initialstatus der Bedieneinrichtung. Diesen Status, bei dem einer die Bedieneinrichtung nutzenden Person auf dem Display 2 (siehe Fig. 3) Interaktionselemente für die Bedienung mindestens eines mit der Bedieneinrichtung gekoppelten elektronischen Gerätes präsentiert werden, nimmt die Bedieneinrichtung nach ihrer Inbetriebnahme und jeweils nach der Beendigung eines kompletten, gegebenenfalls komplexen Bedienvorgangs ein. Ausgehend von diesem Initialstatus ist eine Bedienung des oder der entsprechenden elektronischen Geräte mittels der Bedieneinrichtung durch Spracheingabe oder durch Nutzung des berührungsempfindlichen Displays 2 beziehungsweise Touchscreens möglich. Zum Zwecke der Spracheingabe ist das dafür nutzbare Sprachinterface zunächst durch Betätigung einer in Reichweite des Fahrzeugführers (beispielsweise an einem Lenkrad) angeordneten Funktionstaste 8 (siehe Fig. 3) zu aktivieren. Nach der Entgegennahme einer sprachlichen Bedieneingabe nimmt die Bedieneinrichtung einen Betriebsmodus ein, bei welchem von ihr Systemantworten, das heißt Informationen zur Quittierung einer entsprechenden Eingabe und bei Bedarf Hinweise für die Fortführung des Bedienvorgangs, sowohl über das berührungsempfindliche Display 2 des graphischen Benutzerinterfaces als auch über den mindestens einen, zu dem Sprachinterface gehörenden Lautsprecher (5) (siehe Fig. 3) ausgegeben werden. Andernfalls, also im Falle einer Bedienung über das berührungsempfindliche Display 2, wird von der Bedieneinrichtung ein Betriebsmodus eingenommen, bei welchem ein Feedback, also entsprechende Systemantworten, ausschließlich über das Display 2 ausgegeben werden. Durch den rechts oben dargestellten Zweig des Graphen (Spracheingabe) und den links unten dargestellten Zweig (Eingabe am berührungsempfindlichen Display) wird verdeutlich, dass die Fortsetzung eines komplexen Bedienvorgangs durch weitere Bedieneingaben über das jeweils auch zur Einleitung des Bedienvorgangs genutzte Benutzerinterface erfolgen kann. Darüber hinaus ist es aber auch möglich, einen durch die Benutzung des Sprachinterfaces begonnenen Bedienvorgang jederzeit durch Benutzung des graphischen Interfaces fortzusetzen oder umgekehrt. Dies wird durch die Pfeile zwischen den die beiden Möglichkeiten der Ausgabe (visuell über Display und optisch über Lautsprecher) darstellenden Kästen des Schemas beziehungsweise Graphen verdeutlicht. Wie bereits ausgeführt, kehrt das System nach Beendigung des Bedienvorgangs und der sich daran anschließenden Ausführung der jeweiligen Funktion des bedienten elektronischen Geräts, das heißt nach Abarbeitung beziehungsweise Beendigung der insoweit gegebenen Aufgabe, in den Ausgangszustand, den Initialstatus zurück.

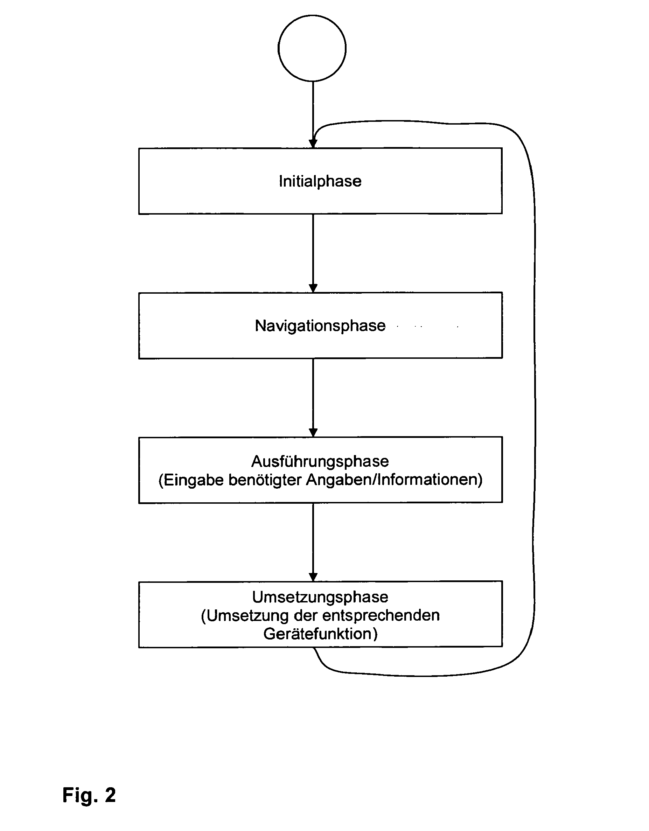

Die Fig. 2 verdeutlicht nochmals die bereits angesprochenen Phasen der Bedienung. Danach wird ausgehend von Initialstatus die Bedienung durch eine so genannte Navigationsphase eingeleitet, in welcher sich der Benutzer durch den Menübaum eines komplexen Bedienvorgangs zu einem Punkt beziehungsweise Knoten bewegt, an welchem er die Ausführung einer ganz bestimmten Funktion eines von ihm ausgewählten, mittels der Bedieneinrichtung bedienten elektronischen Geräts veranlassen kann. In der sich daran anschließenden Ausführungsphase übergibt er seine Anweisungen für die entsprechende Funktion unter jeweiliger Nutzung des Sprachinterfaces und/oder des graphischen Interfaces. An den vollständigen Abschluss des Bedienvorgangs schließt sich die Umsetzungsphase an, eine Phase, in welcher die durch den Bedienvorgang initiierte Funktion durch das entsprechende elektronische Endgerät ausgeführt wird. Danach kehrt das System wieder zum Initialstatus zurück.

Die Fig. 3 zeigt die schematische Darstellung der Architektur eines möglichen Ausführungsbeispiels der erfindungsgemäßen Bedieneinrichtung. Die Bedieneinrichtung besteht danach im Wesentlichen aus dem akustischen Benutzerinterface beziehungsweise Sprachinterface, dem graphischen Interface und der Steuereinrichtung 1. Bestandteile des Sprachinterfaces sind insbesondere Mittel zur Spracheingabe in Form eines Mikrofons 4 zur Bereitstellung eines akustischen Eingabekanals, Mittel 6 zur Interpretation einer Spracheingabe, das heißt zur Sprachverarbeitung, und mindestens ein Lautsprecher 5 zur Ausgabe von Systemantworten. Wie aus der Darstellung ersichtlich ist, sind dabei die Mittel 6 zur Interpretation einer jeweils entgegengenommen sprachlichen Bedieneingabe durch Sprachverarbeitung, bei welchen es sich um eine Spracherkennungseinheit mit mindestens einer ihr zugeordneten Grammatik handelt, als Teil der Steuereinrichtung 1 ausgebildet. Ebenfalls Teil der Steuereinrichtung 1 sind Speichermittel, in denen Audiofiles hinterlegt sind, ein Audioplayer zur Wiedergabe dieser Audiofiles und, im dargestellten Beispiel, eine Sprachsyntheseeinheit 9 zur synthetischen Erzeugung sprachlicher Systemantworten nach dem Prinzip Text-to-speech. Dabei dienen der Audioplayer und die mittels ihm wiedergebbaren Audiofiles der Ausgabe statischer Informationen, das heißt von Informationen, welche für einzelne Zustände beziehungsweise Knoten des die möglichen Bedienvorgänge strukturell abbildenden Menübaums bereits im Voraus bekannt sind. Mittels der Sprachsyntheseeinheit werden hingegen sprachliche Ausgaben beziehungsweise Informationen für dynamische sich während der Laufzeit erst ergebende und so nicht unmittelbar vorhersehbare Ereignisse erzeugt. Das graphische Benutzerinterface umfasst einen berührungsempfindlichen Bildschirm beziehungsweise ein Display 2, welches sowohl zur Bedieneingabe durch Berührung als auch zur Ausgabe von Systemantworten dient und eine im gezeigten Beispiel gemeinsam mit der Einheit zur Interpretation von Spracheingaben ausgebildete Interpretationseinheit 3, als Teil der Steuereinrichtung 1. Die insoweit nur durch ihre Funktionalität veranschaulichte Steuereinrichtung 1 selbst umfasst neben den durch sie realisierten Mitteln für die Interpretation der über das graphische oder das akustische Benutzerinterface entgegengenommenen Bedieneingaben und Speichermitteln für die Audio- und Graphik-Files eine insoweit nicht als Detail dargestellte zentrale Steuer- und Verarbeitungseinheit (zum Beispiel einen Mikrocontroller) und die Einheit 7 für das Dialogmanagement. Die von der Steuereinrichtung 1 aus den Bedieneingaben abgeleiteten Steuersignale zur Steuerung von Gerätefunktionen der mit der Bedieneinrichtung gekoppelten (hier nicht dargestellten) elektronischen Geräte werden am so genannten Backend an das jeweils mit einem Bedienvorgang durch den Nutzer angesprochene Gerät übergeben.

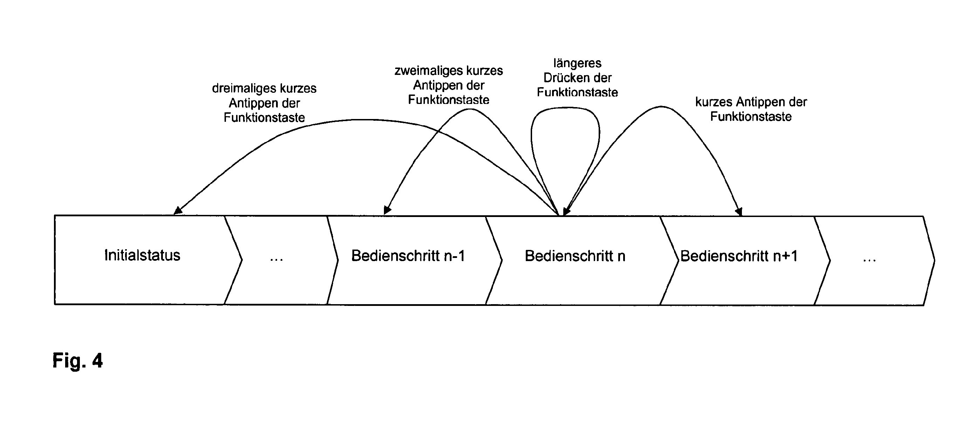

Die Fig. 4 zeigt einen Graphen, welcher die möglichen Bedienvorgänge mittels der auch der Aktivierung des Sprachinterfaces dienenden Funktionstaste 8 (siehe Fig. 3) darstellt. Demnach wird durch einmalige kurze Betätigung im Sinne eines kurzen Antippens (rechter Pfeil des Graphen) das Sprachinterface zu Beginn eines Bedienvorgangs oder zu dessen Fortsetzung aktiviert. Durch den im Kreis auf sich selbst zurückgeführten Pfeil in der Mitte wird der Vorgang einer längeren Betätigung der Funktionstaste 8 verdeutlicht, in deren Ergebnis durch die Bedieneinrichtung eine Hilfeinformation ausgegeben wird. Eine zweimalige Betätigung beziehungsweise zweimaliges kurzes Antippen der Funktionstaste 8 (linker Pfeil) bewirkt den Abbruch der augenblicklichen Bedieneingabe innerhalb eines komplexen Bedienvorgangs und eine Rückkehr zum Ende des letzten Bedienschritts. Dabei werden die entsprechenden, nach diesem Bedienschritt auf dem Display oder über den Lautsprecher und das Display bereits schon einmal ausgegebenen Systemantworten, Informationen und, im Falle des Displays, zugehörige Interaktionselemente für weitere Bedienschritte erneut ausgegeben. Der ganz linke Pfeil verdeutlicht, dass im Falle einer dreifachen Betätigung der Funktionstaste 8 das System in den initialen Status zurückkehrt.

Liste der Bezugszeichen
- 1: Steuereinrichtung
- 2: Berührungsempfindliches Display, Touchscreen
- 3: Mittel zur Interpretation
- 4: Mikrofon
- 5: Lautsprecher
- 6: Mittel zur Interpretation
- 7: Komponente für Dialogmanagement
- 8: Funktionstaste
- 9: Mittel zur Sprachsynthese

## Patentansprüche

1. Bedieneinrichtung zur Bedienung elektronischer Gerätefunktionen in einem Kraftfahrzeug, mit
- einem graphischen Benutzerinterface, bestehend aus einem, eine Ein-und Ausgabeeinheit ausbildenden berührungsempfindlichen Display (2) und aus Mitteln (3) zur Interpretation durch das berührungsempfindliche Display (2) entgegengenommener Benutzereingaben,
- einem akustischen, durch einen Fahrzeugführer mittels einer an einer Einrichtung zur Fahrzeugbedienung angeordneten Funktionstaste (8) aktivierbaren Benutzerinterface, bestehend aus mindestens einem Mikrofon (4), mindestens einem Lautsprecher (5) und Mitteln (6) zur Interpretation als Spracheingabe entgegengenommener Benutzereingaben durch Sprachverarbeitung,
- einer Steuereinrichtung (1) mit einer Komponente (7) für das Dialogmanagement, bestehend aus Speichermitteln und einer Verarbeitungseinheit zur Verarbeitung in den Speichermitteln gehaltener Programmanweisungen und Daten, welche das Zusammenwirken des graphischen Benutzerinterfaces und des akustischen Benutzerinterfaces, die Verarbeitung von Benutzereingaben, die entsprechend den jeweiligen Bedieneingaben auszuführenden Funktionen und die Ausgabe von Systemantworten auf die Benutzereingaben über das Display (2) und/oder den mindestens einen Lautsprecher (5) steuert, **dadurch gekennzeichnet, dass**
im Betriebszustand der Bedieneinrichtung jeder zu einem beliebigen Zeitpunkt mittels der Bedieneinrichtung mögliche Bedienvorgang jeweils wahlweise unter Nutzung des graphischen Benutzerinterfaces oder des aktivierten akustischen Benutzerinterfaces ausführbar ist, wobei die Bedieneinrichtung Systemantworten in einem ersten, von ihr nach einer Benutzereingabe über das graphische Benutzerinterface eingenommenen Betriebsmodus ausschließlich über das Display (2) und in einem zweiten, von ihr nach einer Benutzereingabe über das akustische Benutzerinterface eingenommenen Betriebsmodus sowohl über das Display (2), als auch über den mindestens einen Lautsprecher (5) ausgibt.

2. Bedieneinrichtung nach Anspruch 1, **dadurch gekennzeichnet, dass** das akustische Benutzerinterface Mittel (9) zur sprachlichen Synthese über den mindestens einen Lautsprecher (5) auszugebender Systemantworten umfasst.

3. Bedieneinrichtung nach Anspruch 2, **dadurch gekennzeichnet, dass** zumindest Teile der Mittel (9) zur sprachlichen Synthese als Bestandteil der Steuereinrichtung (1) ausgebildet sind.

4. Bedieneinrichtung nach einem der Ansprüche 1 bis 3, **dadurch gekennzeichnet, dass** die Systemantworten auf dem Display (2) im Kontext eines die mittels der Bedieneinrichtung bedienbaren Gerätefunktionen und die dazu jeweils möglichen oder erforderlichen Bedieneingaben beschreibenden Menübaums ausgegeben werden, dessen Teile durch Interaktionselemente auf dem Display (2) visualisiert werden, wobei die Darstellung nach der Entgegennahme einer über das graphische Benutzerinterface erfolgten Bedieneingabe detailreicher ist, als nach der Entgegennahme einer über das akustische Benutzerinterface erfolgten Bedieneingabe.

5. Bedieneinrichtung nach Anspruch 4, **dadurch gekennzeichnet, dass** bei einer Bedienung über das akustische Benutzerinterface das gezielte Anspringen einzelner Knoten des Menübaums unter Auslassung übergeordneter Knoten ermöglich ist.

6. Bedieneinrichtung nach einem der Ansprüche 1 bis 5, **dadurch gekennzeichnet, dass** diese als eine modulare, mit einer dafür ausgebildeten Fahrzeugschnittstelle verbindbare Einheit ausgebildet ist, in deren akustisches Benutzerinterface bei bestehender Verbindung mit der Fahrzeugschnittstelle ein in dem Fahrzeug fest verbautes Mikrofon (4) und mindestens ein in dem Fahrzeug fest verbauter Lautsprecher (5) einbezogen sind.

7. Bedieneinrichtung nach einem der Ansprüche 1 bis 5, **dadurch gekennzeichnet, dass** diese als eine mobile, mit einer dafür ausgebildeten Fahrzeugschnittstelle verbindbare Einheit mit einem eigenen Mikrofon und mit mindestens einem eigenen Lautsprecher ausgebildet ist, wobei beim Verbinden der Bedieneinheit mit der Fahrzeugschnittstelle durch die Steuereinrichtung (1) der Bedieneinrichtung, im Falle dessen, dass die Fahrzeugschnittstelle über eine Verbindung zu einem fahrzeuginternen Mikrofon (4) verfügt, das eigene Mikrofon der mobilen Einheit und/oder im Falle dessen, dass die Fahrzeugschnittstelle über eine Verbindung zu einem fahrzeuginternen Lautsprecher (5) verfügt, der mindestens eine eigene Lautsprecher der mobilen Einheit deaktiviert sowie das fahrzeuginterne Mikrofon (4) und/oder der mindestens eine fahrzeuginterne Lautsprecher (5) in das akustische Benutzerinterface der Bedieneinrichtung einbezogen werden.

8. Bedieneinrichtung nach Anspruch 7, **dadurch gekennzeichnet, dass** die diese in der Form eines Smartphons realisiert ist.

9. Bedieneinrichtung nach Anspruch 6 oder 7, **dadurch gekennzeichnet, dass** es sich bei dem Mikrofon (4) des akustischen Benutzerinterfaces um ein Mikrofon (4) handelt, dessen Richtcharakteristik auf den Fahrzeugführer ausgerichtet ist.

10. Bedieneinrichtung nach einem der Ansprüche 1 bis 9, **dadurch gekennzeichnet, dass** das akustische Benutzerinterface zum Beginn eines Bedienvorgangs erst nach einer Betätigung der Funktionstaste (8) aktiviert ist.

11. Bedieneinrichtung nach Anspruch 10, **dadurch gekennzeichnet, dass** das akustische Benutzerinterface während eines komplexen Bedienvorgangs, welcher mehrere Bedieneingaben erfordert, bei ausbleibender Bedieneingabe nach dem Ablauf eines in der Steuereinrichtung hinterlegten Timeout deaktiviert ist, wobei auch nach dem Timeout die Fortführung eines komplexen Bedienvorgangs wahlweise durch Benutzereingaben über das graphische Benutzerinterface oder das durch Betätigung der Funktionstaste (8) erneut aktivierbare akustische Benutzerinterface ermöglicht ist.

12. Bedieneinrichtung nach einem der Ansprüche 1 bis 11, **dadurch gekennzeichnet, dass** bei einer Betätigung der Funktionstaste (8) für eine in der Steuereinrichtung (1) hinterlegte Zeitdauer, veranlasst durch die Steuereinrichtung, über den mindestens einen Lautsprecher (5) des akustischen Benutzerinterfaces und/oder das Display (2) des graphischen Benutzerinterfaces die Ausgabe einer Hilfeinformation zu den augenblicklich mittels der Bedieneinrichtung möglichen akustischen Benutzereingaben erfolgt.

13. Bedieneinrichtung nach einem der Ansprüche 1 bis 12, dass bei einer zweifachen Betätigung der Funktionstaste (8) durch die Steuereinrichtung (1) ein Abbruch des aktuellen innerhalb eines komplexen Bedienvorgangs ausgeführten Bedienschritts und ein Zurücksetzen des Bedienvorgangs hinter den letzten, dem abgebrochenen Bedienschritt vorausgehenden Bedienschritt bewirkt und als Systemantwort die Ausgabe einer entsprechenden Information sowohl über das Display (2), als auch über den mindestens einen Lautsprecher (5) veranlasst wird.

14. Bedieneinrichtung nach einem der Ansprüche 1 bis 13, dass bei einer dreifachen Betätigung der Funktionstaste (8) durch die Steuereinrichtung ein Abbruch des augenblicklich ausgeführten Bedienvorgangs und die Einnahme eines weitere Bedienvorgänge ermöglichenden Initialstatus bewirkt und als Systemantwort die Ausgabe einer entsprechenden Information sowohl über das Display (2), als auch über den mindestens einen Lautsprecher (5) veranlasst wird.

15. Bedieneinrichtung nach einem der Ansprüche 1 bis 14, **dadurch gekennzeichnet, dass** die Funktionstaste (8) am Lenkrad eines Automobils angeordnet ist.

16. Bedieneinrichtung nach einem der Ansprüche 1 bis 15, **dadurch gekennzeichnet, dass** diese selbst mittels ihrer bedienbare Funktionen der Telekommunikation und/oder Nachrichtenübertragung und/oder der Informationsvermittlung zur Verfügung stellt.
